(19) Europäisches Patentamt
European Patent Office
Office européen des brevets

(11) Publication number: **0 131 581 B1**

# (12) EUROPEAN PATENT SPECIFICATION

(45) Date of publication of patent specification: **17.08.88**

(51) Int. Cl.$^4$: **H 04 Q 9/14**, G 06 K 19/00

(21) Application number: **83903023.6**

(22) Date of filing: **09.08.83**

(86) International application number: **PCT/US83/01213**

(87) International publication number: **WO 84/00869 01.03.84 Gazette 84/06**

## (54) REMOTE PASSIVE IDENTIFICATION SYSTEM.

(30) Priority: **09.08.82 US 406471**

(43) Date of publication of application: **23.01.85 Bulletin 85/04**

(45) Publication of the grant of the patent: **17.08.88 Bulletin 88/33**

(84) Designated Contracting States: **BE DE FR GB NL**

(56) References cited:
US-A-3 859 624
US-A-3 944 928
US-A-4 333 072
US-A-4 399 437

(73) Proprietor: **CORNELL RESEARCH FOUNDATION, INC.**
**East Hill Plaza**
**Ithaca, N.Y. 14850 (US)**

(72) Inventor: **SIGRIMIS, Nick, A.**
**Superior College of Agriculture of Athens**
**75 Iera Odos Botaniko Athens 103 (GR)**
Inventor: **SCOTT, Norman, R.**
**144 Burleigh Drive**
**Ithaca, NY 14850 (US)**

(74) Representative: **Allam, Peter Clerk et al**
**LLOYD WISE, TREGEAR & CO. Norman House**
**105-109 Strand**
**London WC2R 0AE (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 131 581 B1

Courier Press, Leamington Spa, England.

## Description

The present invention relates to a system for identifying objects in which a base transmitter and a base receiver cooperate with a transponder with which is associated an identifying code. The invention also relates to a passive transponder for such a system.

The system of the invention uses principles akin to those which have been employed in pulsed radar. In such radar, a coded transponder associated with the object is energized by radio frequency interrogator burst pulses to produce coded identification signals which are used to identify the object. The systems of the present invention has particular utility for identifying livestock.

Many techniques to detect or identify objects have been developed in the past with applications to industry, inventory control, security, safety control, etc. Individual object identification has become more complex because a specific identification code is desired as opposed to simply the presence or absence of a detection signal. Optimally, a specific identification code must be sent back from the source to the interrogation device.

The present invention was developed in an effort to satisfy the need to uniquely identify each of many animals in the livestock industry. Animal identification is the first step towards an automatic cattle herd management system, which will make it possible to know individual cow production, feeding level, animal health and to keep a daily record.

A transmission link must be established from the animal to transfer the coded identification signal. While a number of different types of transmission links are possible including optical, audio, and laser beams, and electromagnetic waves, radio transmission waves have been selected as being the most cost effective. The identification system of the present invention utilizes passive transponders which are carried by the livestock to be identified. The transponders are passive, as opposed to active, in that no integral power source is provided. Passive transponder techniques are most attractive due to their long life and low cost characteristics. Transponder design utilizing circuit integration techniques of hybrid technology can greatly reduce initial costs.

The present invention is concerned with a system for identifying objects of the kind comprising a base transmitter and a base receiver, and at least one passive transponder carriable by an object to be identified, the or each transponder being energisable by energy received from the transmitter to generate a coded return signal for receipt by the base receiver, the coding identifying the transponder and thereby an object carrying the transponder.

Identification systems using passive transponders associated with remote objects to be identified are well known in prior art patents as evidenced by the U.S. patent 4,262,632 (Hanton et al), U.S. patent 3,897,753 (Lee), U.S. patent 3,964,024 (Hutton et al), and U.S. patent 4,129,855 (Rodrian). The transponders of Lee, Hutton et al., and Rodrian are powered inductively at low frequencies (30—300 KHz) or very low frequencies (3—30 KHz), while the transponder disclosed in the Hanton et al patent uses radio frequency energy to interrogate and power the transponder. Furthermore, the transponder of Hanton et al includes a coded memory unit, whereby a series of binary coded electric pulses peculiar to the object are broadcast back to the interrogator.

While the prior devices normally operate quite satisfactorily, they possess certain inherent drawbacks which decrease their efficiency and increase their cost. Thus, for example, the transponders of the prior devices are relatively large and thus are not suitable for implantation in an animal. Furthermore, those transponders which are implantable operate at such high frequencies as to be injurious to an animal's health. Finally, many of the prior art devices include complicated transponder circuitry which increases the costs thereof.

An identification system of the kind defined above is disclosed in U.S. patent 3,859,624 (Kriofsky et al).

The system described in the Kriofsky patent has a base transmitter which inductively couples to the transponder at a relatively low frequency. The transponder uses the received energy to energise a power supply unit which in turn provides the power to energise its own transmitter circuit. The transmitter energy is radiated at a significantly different frequency to that received. Although the Kriofsky system has periods of transmit and receive for the base station (the interrogator), this is done because a single inductive loop is used for both transmission and reception. In normal operation the initiation of a further transmission period to follow a reception period is dependent on the reception of a valid transmission from the transponder.

We will describe hereinafter how the present invention can be implemented to provide a simple and economic system which enables a relatively simple and cheap transponder to be used. The present invention proposes the use of radio frequency burst signals from the interrogator, the RF burst signals being generated under the control of a time division multiplexing (TDM) means which switches the interrogator to the receive condition between bursts to receive coded return signals from a transponder. Thus the transmit to receive period ratio, i.e. the duty cycle, is controlled by TDM circuitry independently of operation of any transponder within range of the transmitter signal. The transponder in the system to be described operates at the same RF frequency as the base transmitter, the two signals being clearly separated by the use of time division multiplexing. The transponder return signal is generated by a simple circuit namely by ringing of the input antenna arrangement of the transponder. That is the same antenna arrangement is used for both transmission and reception and the energy stored in it during transmission provides the return (echo) signal by having the antenna arrangement ring. To this end the antenna arrangement of the embodiment to be described has an inductive loop antenna connected with a capacitor in a resonant circuit.

More broadly stated, the present invention provides in one aspect a system of the kind defined above characterised in that:

the base transmitter is operable to produce bursts of a radio frequency signal,

the transponder includes an antenna arrangement for receiving the burst signal and for storing energy therefrom, and

the transponder is responsive to each such burst signal received thereby to generate a coded return signal at the same radio frequency as the received burst signal in the interval preceding the next such burst signal, the energy of the return signal being obtained from that stored in the antenna arrangement, and characterised by time division multiplexing means controlling the operation of the base transmitter and base receiver to switch the receiver off and on while the transmitter is switched on and off respectively.

Preferably the antenna arrangement of the transponder is used both for receiving the burst signals and radiating the return signals. More particularly it is preferred that this common transmit/receive antenna arrangement comprises an inductive loop and a capacitor connected therewith in a circuit resonant at the radio frequency of the burst signals and to provide each return signal by the ringing of the resonant circuit in response to each received burst signal. This is a particularly simple and economic way of providing the return signals. Furthermore they are inherently synchronized with the burst signals without any special provision to this end in the transponder. The transmit and receive operation of the base transmitter and receiver is independent of the transponder being entirely under the control of the time division multiplexing means.

The time division multiplexing means preferably comprises a radio frequency duty control logic device that defines the radio frequency burst signals. The base transmitter preferably includes a loop antenna to produce an oscillating field for energising a transponder in its vicinity and a radio frequency power amplifier may be connected between an output of the just-mentioned RF duty control logic device and the base transmitter loop antenna for amplifying the burst signals. In the embodiment of the system to be described, the base receiver includes a loop antenna for receiving return signals from the transponder.

The invention is also concerned with a transponder usable in a system in accord with the invention. The Kriofsky U.S. patent 3,859,624 already discussed discloses a passive transponder of the kind that includes an antenna arrangement for receiving signals to energise the transponder to produce return signals, means storing an identification code identifying the transponder, and means for modulating the return signals with the identification code.

In another aspect the present invention provides a transponder of the kind outlined in the preceding paragraph that is responsive to radio frequency burst signals at a given radio frequency to generate a return signal at said given radio frequency following each such burst signal by using energy stored in the antenna arrangement.

To this end it is preferred that the transponder antenna arrangement comprises an inductive loop connected with a capacitor to form a circuit resonant at said given frequency, the loop receiving the radio frequency burst signals and the return signal being generated by the ringing of the resonant circuit in response to each such burst signal.

In the transponder the identification code storage means preferably comprises a code register programmed with the code and there is further provided means for encoding the identification code from the code register and transforming it to a twin binary signal having a transition of state in each binary bit, the twin binary signal being applied by the modulator to each return signal. Furthermore, frame control means may be provided that is responsive to clock pulses for controlling the output of the code register in accordance with a predetermined number of bits. A source of clock pulses in the transponder may be designed to be actuable when the capacitor of the resonant circuit discussed above is charged to a sufficient voltage to activate the identification code storing means.

The invention and its preferred practice, outlined above, will now be described in greater detail with reference to an embodiment illustrated in the accompanying drawings, in which:—

Fig. 1 is a block diagram of the remote passive identification system embodying the invention;

Fig. 2 is a block diagram of the system transponder;

Fig. 3 is a block diagram of the system transmitter;

Fig. 4 is a block diagram of the system receiver;

Figs. 5a and 5b illustrate the transmitter burst signal and transponder coded identification signals, respectively;

Figs. 6a and 6b illustrate an encoded data sequence and a radio frequency pulse amplitude modulated wave with a marker, respectively;

Figs. 7a, 7b, and 7c illustrate the oscillating field produced by the transmitter, and the horizontal and vertical components of the field, respectively;

Figs. 8a, 8b and 8c illustrate various switching transient effects on the envelope of the coded identification signal received by the receiver;

Fig. 9 illustrates the twin binary data signal produced in the transponder;

Fig. 10 illustrates the data format within the transponder;

Fig. 11 is a graphical representation of the current consumption and bit period of the transponder versus power supply voltage;

Fig. 12 is a graphical representation of the transponder transient response;

Fig. 12a is a graphical representation of transponder voltage with respect to its orientation to the power field; and

Figs. 13—16 are flow diagrams illustrating the reading of the code identification signal in the receiver signal processor.

Detailed description

A remote passive identification system of the present invention is shown in Fig. 1. A power transmitter 2 produces a plurality of radio frequency (RF) burst signals 4 which are transmitted via a loop antenna 6 in an oscillating field configuration as will be developed in greater detail below. The burst signals are received by a uniquely coded identification transponder 8 associated with the object to be identified. While the system is suitable for identifying many types of objects such as motor vehicles, railroad cars and the like, the system will be described for use in identifying the individual cows of a herd of livestock. Accordingly, the transponder is adapted for mounting on the collar of a cow or preferably is implanted in the cow's body. Different transponders, each uniquely coded, are associated with different cows of a herd for individual animal identification.

The burst signals 4 from the transmitter activate the transponder 8 to produce a plurality of coded identification signals 10. The transmitter burst signals from the transponder, in the form of a ringing echo, are shown more particularly in Figs. 5a and 5b, respectively. The coded identification signals are received by the loop antenna 12 of a receiver 14 in the identification system. The receiver is operable to interpret the coded identification signals to identify the cow associated with the transponder from which the signals were transmitted.

The operation of the transmitter and receiver is time division multiplexed as shown by the line 16. When a cow is to be identified, the transmitter is switched on to produce the burst signals at a given frequency. As will be developed below, the burst signals are of relatively high power since they provide the power for energizing and operating the transponder to produce the coded identification signals which are relatively low power. Owing to the time division multiplexing, the transmitter is switched off and the receiver is switched on to receive low power coded identification signals from the transponder. In this manner, the receiver is prevented from receiving the high power burst signals which would interfere with the low power identification signals and would damage the receiver. The coded identification signals are preferably at the same frequency as the burst signals, thereby minimizing the size and complexity of the transponder circuitry. Time division multiplexing of the transmitter and receiver provides superior characteristics compared to continuous wave operation with respect to signal detection.

The transmitter and receiver circuitry are preferably arranged in an interrogator device having separate loop antennas for transmission and reception. The cows to be identified are brought in succession into the range of the device, which is on the order of six feet, whereby the transmitter transmits the burst signals and the receiver receives the coded identification signals to successively identify the cows.

Referring now to Fig. 3, the power transmitter will be described. A crystal clock 18 stabilizes the radio frequency signal which is programmed by the programmable divider 20. The radio frequency duty control logic device 22 provides the time division multiplexing operation of the transmitter and receiver. An RF power amplifier 25 amplifies the RF burst signals prior to transmission by the loop antenna 6 which preferably comprises a power coil. The power coil produces an intermittent oscillating field as shown in Fig. 7a. The horizontal component Hx as a function of the distance X from the transmitter to the transponder is shown in Fig. 7b and the vertical component Hy as a function of X is shown in Fig. 7c. The field pattern of Fig. 7a, typical of a magnetic dipole, is appropriate for capturing the moving transponder 8 under random angle of approach and random movement. For a transponder entering the field at a random angle and maintaining the same orientation along a path, there exists at least one and usually two locations of maximum power reception. For a randomly reoriented path the number of locations of sufficient power pick up may be increased but the expected accumulated active length remains the same. For a transponder to escape unpowered, the combination approach angle · translational movement · rotational movement must follow a pattern correlated to the field pattern. This is a very unlikely event and it is expected that negligible escape rates will be experienced. The latter also depends on the available field power along the transponder path.

The Poynting vector (P) of the field radiating from the power coil of the transmitter loop antenna is given by

$$\vec{p} = \frac{n_o (bR)^4 I_o^2}{32\, r^3} \sin 2\theta \hat{r} \qquad (1)$$

where:

R=radius of the coil loop

r=distance from coil to point P

$I_o$=current in the loop

θ=azimuthal angle of point P

b=wave number=$w_o/c=2\pi f_o/c$

c=speed of light

$n_o$=characteristic impedance of the free space

At the given operating frequency $f_o$=2.643 MHz:

$$\lambda = \frac{c}{f_o} = 113.5 \text{ m}$$

The radiation resistance of the transmitter antenna power coil, derived from Eq. 1, is found to be 3 mohms and the total radiated power is given by Eq. 1a:

$$W_{rad} = \frac{1}{2} R_{rad} I_o^2 \quad (1a)$$

For $I_o$=15A→$W_{rad}$=340 mWatts

The radiated power is very small and the transmitter amplifier works at almost zero efficiency. Radio interference by this system is limited to the near field.

As set forth above, the burst signals from the transmitter loop antenna provide power for the transponder. As shown in Fig. 2, the transponder includes an antenna 24 which comprises an inductor 26 and a storage capacitor 28.

For ranges of the transmitter antenna $r << \lambda$, the radiated field (Eq. 1) is dominated by the static field strength and the power coil of the transmitter antenna and the inductor coil of the transponder antenna are considered as magnetically coupled. The magnetic field strength (H) is given by Eq. 2:

$$\vec{H} = \frac{N \cdot A \cdot I_o}{4\pi r^3} (2 \cos\theta \hat{r} + \sin\theta \hat{\theta}) \varepsilon^{j w_o t} \quad (2)$$

where

$A=\pi R^2$

N=number of turns of the coil.

Equation 2 applied to the power coil determines the available power at the transponder site during the "power phase". Applied to the transponder coil, Eq. 2 indicates the signal power reaching the receiving antenna during the "read phase". The field pattern expressed by Eq. 2 is shown in Figure 7a. The angle <θ> is a guide for positioning the power and receiving coils with respect to the most likely path of the transponder. The receiving coil must be positioned and oriented for minimum reception from the transmitter power coil and maximum reception from the transponder.

The distance r is an independent, random variable, not under the control of the system designer. Thus, signal strength is expressed by the magnetic dipole moment M of the transponder as follows:

$$M = N \cdot A \cdot I_o = k_1 \cdot N \cdot R^2 \cdot I_o \quad (3)$$

The signal power induced in the coil of a loop antenna losely coupled to the transponder is given by Eq. 4:

$$P_s = k_2 \, \omega_o M = k_2 \cdot N \cdot R^2 \cdot I_o \omega_o = k_3 \frac{R \cdot E_o}{N} \quad (4)$$

where $E_o$=the peak "echo" voltage at the transponder LC tank during the read phase, and where the factor for distance has been omitted. Equation 4 implies that the objective of reducing the transponder size (R) reduces the signal power received. Reducing the number of turns N of the transponder coil increases the signal power but on the other side an equivalent increase in field power is required to bring the voltage $E_o$ of the transponder antenna comprising the inductor and capacitor to the same level.

The receiver of the passive remote identification system of the present invention is shown more particularly in Fig. 4. The receiver comprises a switching preamplifier 30 which receives the incoming coded identification signals from the transponder 8 via the antenna 12. The switching preamplifier further includes an opto-isolator 32 which receives the time division multiplexed signal 16 from the RF duty control logic device of the transmitter 2.

As set forth above, the receiver preamplifier must be switched off during transmission of the radio frequency burst signals from the transmitter to avoid damage to the receiver by the burst signals. However, a fast recovery of the receiver is required when it is switched on to receive the coded identification signals. During the switching on transition period, a switching transient is induced in the front end tuned element of the preamp. The switching circuitry is very important in reducing this transient but the transient response cannot be totally eliminated. This is considered as an additive interference which has the same exact frequency, $\omega_o$, as the received signal but random phase angle, $\theta_t$. The received signal, $S_t$, is the sum of the transponder signal, $X_t$, and the transient interference signal $n_t$, and is described by Eq. 5:

$$S_t = X_t + n_t = X_k \cos \omega_o t + n_o \cos(\omega_o t + \theta_t) \quad (5)$$

where $X_k$=binary pulse sequence of the transmitted code.

Eq. 5 implies that the signal power $X_t$ exists entirely in the composite signal in amplitude and phase of $S_t$, the proportions depending on $n_o$ and $\theta_t$. Detection of the signal $X_t$ from the envelope $S_t$ could partly or entirely be missed as shown in Figs. 8a and 8b. Under certain conditions of $n_o$ and $\theta_t$, the envelope of $S_t$ may produce a pulse sequence which is the complement of $X_k$ sent by the transponder as shown in Fig. 8c. In the case of $\theta_t=0°$, the envelope of $S_t$ reproduces the sequence $X_k$ without any loss.

The system transponder is shown more particularly in Fig. 2. The transponder includes an LC antenna 24 which receives burst signals from the transmitter and sends coded identification signals to the receiver, both at the same frequency. As set forth above, the burst signals induce a voltage across the inductor coil 26 which is stored in the capacitor 28. When the capacitor is charged, it activates a data clock 34 via a line path 36. A code register 38 is programmed with the data format of the particular transponder in which it is arranged. From the code register, the data format is encoded in a bit encoder 40 to produce the coded identification signal. A modulator 42 modulates the coded signal prior to transmission from the transponder antenna. It will be appreciated that the transponder is only activated in response to the burst signals from the system transmitter, thereby insuring that extraneous coded signals from transponders not to be identified are prevented.

The time division multiplexing scheme between power transmission and signal reception introduces very poor channel performance at low frequencies. Considerable low frequency (DC level drift) is picked up by the channel plus switched receiver. Another source of low frequency noise is the AM modulation of the signal by the change in position and orientation of the transponder.

The first step to optimize channel performance is to carefully shape the baseband signal spectrum. Shaping of signal is performed by the bit encoder 40. The result is a twin binary data signal shown in Fig. 9. As shown therein, a long string of 0's and 1's which carry low frequencies is eliminated. Rather, each data bit, i.e. a 0 or a 1, is represented by a positive and a negative pulse, the difference being only in the phase. One transition is guaranteed in the middle of each data bit. A signal from the data clock of the transponder is then sent along with the data and bit synchronization becomes easier. To solve the problem of phase abiguity as to which transition is the start and which is the middle of a bit, "housekeeping bits" are inserted in the frame format to provide correct phase lock of the receiver clock. Furthermore, with the twin binary data signal of Fig. 9, there is zero DC level transmitted because the modulated binary pulse train probability density is independent of the codeword ($P+_1=0.5$, $P-_1=0.5$). This simplifies threshold computation for minimum detection error. Finally, the 3 dB bandwidth of the discretely fabricated transponders is 50 KHz under load conditions and the LC antenna has a Q of 53 which can be improved by integrated circuit fabrication.

A sample data format, programmable on the code register of the transponder, is shown in Fig. 10 wherein

$D_2$—$D_6$, $D_9$—$D_{14}$=information bits
$D_1$, $D_{15}$, $D_{16}$=housekeeping bits (start, stop, alarm)
$D_7$, $D_8$=insert control bits
$M_1$—$M_{16}$=synchronization word (16×"0"), marker

Insert bits, $D_7$—$D_8$, provide quick synchronization (marker detection) without ambiguity. The marker of length 16 is not stored in the register but is simply a 16 bits pause (16 "0"). The codeword that follows is constructed so that the marker cannot appear in any position internally within the word or as an overlap with a portion of the next codeword's marks. The information bits are 10 and all numbers from 0 to 1023 are possible. There is no limit on extending the codeword's length to accommodate larger numbers.

The encoded data sequence is shown in Fig. 6a while the pulse amplitude modulated wave as modulated by the baseband and sequence is shown in Fig. 6b.

A graphical representation of the current consumption I and bit period $T_b$ of the transponder versus power supply voltage is shown in Fig. 11. The bit period changes only by 10% for voltages above 2.8 volts and the receiver is designed to accept sequences with bit periods 100% longer than the expected minimum value. Transponder transient response is shown in Figure 12. The charge up time constant is 12 ms and the 90% rise time is 0.13 sec. The minimum registration time (power up+2 frames) is 0.20 sec. For 5 codeword repetitions the required time is 0.3 sec.

The transponder antenna effective area can be expressed as follows (see Fig. 12a):

$$A_{eff}=A_o(\vec{n}\cdot\vec{p}) \quad (6)$$

The peak to peak voltage across the LC antenna then is expected to be:

$$V_{pp}=k\cdot\cos(\vec{n}\cdot\vec{p})= k\cos\Phi \quad (7)$$

Equation 7 is valid under a no load condition. The load applied from the transponder circuitry modifies Eq. 7 for less $\Phi$ dependence. The required voltage level for reliable transmission is 4 Vpp and the transponder capture probability at a point can be defined as:

$$p_c=\frac{\Phi 4v}{90} \quad (8)$$

This probability can then be increased by increasing the power of the field. The maximum field power must be determined by the allowable area of transponder activation to prevent multi-transponder response.

Referring once again to Fig. 4, the receiver circuitry is adapted to provide better signal recovery and stability in time. Correlating the composite signal $S_t$ (Eq. 5) with the transponder signal $X_t$ can recover the useful signal $X_t$ while rejecting interference.

The correlator matched filter 44 provides means for stochastic processing of the received signal based on the signal and noise statistics. Likelihood ratio (Λ) computation for a probability of error criterion decision rule will be part of the signal processor 46. The likelihood ratio is continuously updated based on the current signal simplified statistics. This will allow for signal detection with much smaller signal to noise ratios which reduces the nulling angle of the transponder while maintaining nearly zero error rate.

Figs. 13—16 are flow charts illustrating data code processing within the signal processor 46 of the receiver. Specifically, Fig. 13 illustrates the transponder reader state, Fig. 14 illustrates a search for stop bits, Fig. 15 illustrates a frame SYNC, and Fig. 16 illustrates code reading. In Figs. 13—16, $n_F$ represents the number of frame block efforts, $C_n$ represents the number of codewords received, T is the acceptable bit period where $\overline{T} \neq T$, $n_s$ is the SYNC bits counter and NC represents the number of cows in the group. In Figs. 14, 15, and 16, I is the input train of data and K represents the bits counter (i.e. 1 . . . 16).

The above-described transponder embodying the present invention is simple in construction and of smaller size than prior art devices, whereby the transponder may be fabricated with integrated circuit techniques. From Eq. 2, it is possible to trade off reading range (r) with transponder size (A) without affecting the signal strength. Limiting the reading distance from 2.5 m (8.3 ft.) to 1.9 m (6.3 ft.), will allow for an equivalent transponder size reduction from 4.5 cm to 3.0 cm. Reading distances less than 2 m are not unreasonable in practice.

**Claims**

1. A system for identifying objects comprising a base transmitter (2) and a base receiver (14), and at least one passive transponder (8) carriable by an object to be identified, the or each transponder being energisable by energy received from the transmitter to generate a coded return signal for receipt by the base receiver, the coding identifying the transponder and thereby an object carrying the transponder, characterised in that:

the base transmitter (2) is operable to produce burst of a radio frequency signal,

the transponder (8) includes an antenna arrangement (24) for receiving said burst signals and for storing energy therefrom, and

the transponder is responsive to each such burst signal received thereby to generate a coded return signal at the same radio frequency as the received burst signal in the interval preceding the next such burst signal, the energy of the return signal being obtained from that stored in said antenna arrangement, and characterised by time division multiplexing means (22) controlling the operation of the base transmitter (8) and base receiver (14) to switch the receiver off and on while the transmitter is switched on and off respectively.

2. A system as claimed in Claim 1 in which said antenna arrangement (24) is used for both receiving the burst signals and radiating the return signals.

3. A system as claimed in Claim 1 or 2 in which said antenna arrangement (24) comprises an inductive loop (26) and a capacitor (28) connected therewith in a circuit resonant at the radio frequency of the burst signals and to provide each return signal by the ringing of the resonant circuit in response to each received burst signal.

4. A system as claimed in Claim 3 wherein said transponder (8) further includes a modulator (42) for modulating said identification code onto the ringing signal in the said resonant circuit (26:28).

5. A system as claimed in any preceding claim, in which the base transmitter (2) includes a loop antenna (6) to produce an oscillating field.

6. A system as claimed in Claim 5, wherein said time division multiplexing means (22) comprises a radio frequency duty control logic device that defines the radio frequency burst signals.

7. A system as claimed in Claim 6, wherein said base transmitter (2) further includes a radio frequency power amplifier (25) connecting between an output of said radio frequency duty control logic device and said base transmitter loop antenna for amplifying said burst signals.

8. A system as claimed in any preceding claim, wherein said base receiver (14) includes a loop antenna (12) for receiving said return signals from said transponder.

9. A passive transponder (8) for cooperation with a base transmitter and base receiver in a system as claimed in Claim 1, the transponder (8) including an antenna arrangement (24) for receiving signals to energise the transponder to produce returns signals, means (38) storing an identification code identifying the transponder (8), and means (42) for modulating the return signals with the identification code, characterised by:

said antenna arrangement (24) being responsive to radio frequency burst signals at a given radio frequency to generate a return signal at the said given radio frequency following each such burst signal (4) by using energy stored in the antenna arrangement (24).

10. A passive transponder as claimed in Claim 9 wherein said antenna arrangement (24) comprises an inductive loop (26) connected with a capacitor (28) to form a circuit resonant at said given frequency, said loop (26) receiving the radio frequency burst signals, and the return signal being generated by the ringing of the resonant circuit (26:28) in response to each such burst signal.

11. A passive transponder as claimed in Claim 9 or 10 wherein said identification code storage means (38) comprises a code register programmed with the code and further comprising means (40) for encoding said identification code from said code register and transforming it into a twin binary signal having a transition of state in each binary bit, said twin binary signal being applied by said modulator (42) to each return signal.

12. A passive transponder as claimed in Claim 11 further comprising frame control means responsive to clock pulses for controlling the output of said code register (38) in accordance with a predetermined number of bits.

13. A passive transponder as claimed in Claim 10 or 11, further comprising a source (34) of clock pulses, said source (34) of clock pulses being actuable when said capacitor (28) is charged to a sufficient voltage to activate said identification code storing means (38).

**Patentansprüche**

1. Vorrichtung zur Identifizierung von Gegenständen, aufweisend einen Baisissender (2), einen Basisempfänger (14) und wenigstens einen passiven Transponder (8), der von einem zu identifizierenden Gegenstand mitführbar ist, wobei der oder jeder Transponder durch vom Sender erhaltene Energie erregbar ist, um ein kodiertes Rückmeldesignal für den Empfang durch den Basisempfänger zu erzeugen, wobei die Kodierung den Transponder und damit einen den Transponder mit sich führenden Gegenstand identifiziert, dadurch gekennzeichnet, daß

der Basis sender (2) betätigbar ist, um Radiofrequenz-signal-Stöße bzw. Stoß-Signale zu erzeugen,

der Transponder (8) eine Antennenanordnung (24) für den Empfang der Signal-Stöße und zur Speicherung deren Energie aufweist, und

der Transponder auf jedes derartig empfangene Stoß-Signal anspricht, um dadurch ein kodiertes Rückmeldungssignal mit der gleichen Radiofrequenz wie das empfangene Stoß-Signal in der Zeitspanne vor dem nächsten Stoß-Signal, zu erzeugen, wobei die Energie des Rückmeldesignals von der in den in der Antennenanordnung gespeicherten Signal erhalten wird, und dadurch gekennzeichnet, daß eine Zeitteilungs-Multiplexeinrichtung (22) die Arbeitsweise des Basissenders (8) und des Basisempfängers (14) steuert, um den Empfänger aus- und anzuschalten, während der Sender an- und ausgeschaltet ist.

2. Vorrichtung nach Anspruch 1, dadurch gekennzeichnet, daß die Antennenanordnung (24) sowohl zum Empfang der Stoß-Signale ist auch zum Abstrahlen der Rückmeldesignale eingesetzt ist.

3. Vorrichtung nach Anspruch 1 oder 2, dadurch gekennzeichnet, daß die Antennenanordnung (24) eine induktive Schleife (26) und einen Kondensator (28) aufweist, der mit jener in einen Resonanzstromkreis mit der Radiofrequenz der Stoß- Signale geschaltet ist, und daß jedes der Rückmeldesignale erzeugt wird, indem der Resonanzstromkreis im Ansprechen auf jedes empfangene Stoß-Signal angeregt wird.

4. Vorrichtung nach Anspruch 3, dadurch gekennzeichnet, daß der Transponder (8) weiterhin einen Modulator (42) aufweist, um den Identifizierungscode auf das Anregungs-Signal in dem Resonanzstromkreis (26:28) aufzumodulieren.

5. Vorrichtung nach irgendeinem der vorangehenden Ansprüche, dadurch gekennzeichnet, daß der Basissender eine Schleifenantenne (6) aufweist, um ein oszilierendes Feld zu erzeugen.

6. Vorrichtung nach Anspruch 5, dadurch gekennzeichnet, daß die Zeitteilungs-Multiplexeinrichtung (22) eine Radiofrequenz-Laststeuer-Logikeinrichtung aufweist, welche die Radiofrequenz-Stoß-Signale prägt.

7. Vorrichtung nach Anspruch 6, dadurch gekennzeichnet, daß der Basissender (2) einen Radiofrequenz-Leistungsverstärker (25) aufweist, der zwischen einem Ausgang der Radiofrequenz-Laststeuer-Logikeinrichtung und der Basissender-Schleifenantenne zur Verstärkung der Stoßsignale geschaltet ist.

8. Vorrichtung nach einem der Ansprüche 1 bis 7, dadurch gekennzeichnet, daß der Basisempfänger (14) eine Antennenschleife (12) aufweist, um das Rückmeldesignal von dem Transponder zu empfangen.

9. Passiver Transponder (8) zur Zusammenarbeit mit einem Basissender und einem Basisempfänger in einem System nach Anspruch 1, wobei der Transponder (8) eine Antennenanordnung (24) zum Empfangen von Signalen aufweist, um den Transponder mit Energie zu versorgen bzw. zu erregen, um Rückmeldesignale zu erzeugen, mit einer Einrichtung (38) zum Speichern eines Identifizierungscodes, der den Transponder (8) identifiziert, und mit einer Einrichtung (42) zum Modulieren der Rückmeldesignale mit dem Identifizierungscode, dadurch gekennzeichnet, daß

die Antennenanordnung (24) auf Radiofrequenz-Impulssignale mit einer gegebenen Radiofrequenz anspricht, um auf jedes Impuls- bzw. Stoß-Signal (4) folgend ein Rückmeldesignal mit der vorgegebenen Radiofrequenz zu erzeugen, indem die in der Antennenanordnung gespeicherte Energie eingesetzt wird.

10. Passiver Transponder nach Anspruch 9, dadurch gekennzeichnet, daß die Antennenanordnung (24) eine Radiofrequenz-Impuls-Signale empfangende Induktionsschleife (26) aufweist, die mit einem Kondensator (28) zusammengeschaltet ist, um einen Stromkreis zu bilden, der bei der gegebenen Frequenz in Resonanz ist, wobei das Rückmeldesignal dadurch erzeugt wird, daß der Resonanzstromkreis (26:28) im Ansprechen auf jedes Impuls-Signal in Resonanz geht.

11. Passiver Transponder nach Anspruch 9 oder 10, dadurch gekennzeichnet, daß die Identifizierungscode-Speichereinrichtung (38) ein Coderegister, welches mit dem Code progammiert ist, und weiterhin eine Einrichtung (40) zum Dekodieren des Identifizierungscodes vom Coderegister und zum Umformen in ein doppelbinäres Signal aufweist, welches einen Übergangszustand in jedem binären Bit enthält, wobei das doppelbinäre Signal durch den Modulator (42) jedem Rückmeldesignal hinzugefügt wird.

12. Passiver Transponder nach Anspruch 11, dadurch gekennzeichnet, daß eine Rahmensteuereinrichtung vorgesehen ist, die auf Zeitsteuerimpulse zur Steuerung des Ausgangs des Coderegisters (38) in Übereinstimmung mit einer vorbestimmten Anzahl von Bits anspricht.

13. Passiver Transponder nach Anspruch 10 oder 11, gekennzeichnet durch eine Quelle (34) für Zeitsteuerimpulse, welche betätigbar ist, wenn der Kondensator (28) auf eine ausreichende Spannung geladen ist, um die Identifizierungscode-Speichereinrichtung (38) zu betätigen.

**Revendications**

1. Un système pour identifier des objets comprenant un émetteur de base (2) et un récepteur de base (14), et au moins un transpondeur (8) passif, portable par un objet à identifier, le ou chaque transpondeur pouvant être activé par l'énergie reçue de l'émetteur afin de générer un signal codé de retour à l'adresse du récepteur de base, la codification identifiant le transpondeur ainsi qu'un objet portant le transpondeur, caractérisé en ce que:

—l'émetteur de base (2) permet d'émettre des impulsions en fréquences radio,

—le transpondeur (8) comprend une antenne (24) pour recevoir lesdites impulsions et pour stocker l'énergie qui en vient, et

—le transpondeur répond à chaque telle impulsion reçue ainsi et génère un signal codé de retour, à la même fréquence radio que l'impulsion reçue, dans l'intervalle précédant l'impulsion suivante, l'énergie du signal de retour provenant de celle stockée dans ladite antenne, et caractérisé par des moyens (22) de multiplexage par intervalles de temps qui contrôlent le fonctionnement de l'émetteur de base (8) et du récepteur de base (14) pour arrêter et déclencher le récepteur tandis que l'émetteur est déclenché et arrêté respectivement.

2. Un système selon la revendication 1, dans lequel ladite antenne (24) sert à la fois à la réception des impulsions et à l'émission des signaux de retour.

3. Un système selon la revendication 1 ou la revendication 2, dans lequel ladite antenne (24) comprend une bobine d'induction (26) et une capacité (28) placées ensemble dans une circuit résonnant à la fréquence radio des impulsions afin de fournir chaque signal de retour grâce à l'oscillation du circuit résonnant en réponse à chaque impulsion reçue.

4. Un système selon la revendication 3, dans lequel ledit transpondeur (8) comprend de plus un modulateur (42) afin de moduler ledit code d'identification d'après le signal d'oscillation dans ledit circuit résonnant (26 à 28).

5. Un système selon l'une quelconque des revendications précédentes, dans lequel l'émetteur de base (2) comprend une antenne (6) en anneau afin de produire un champ oscillatoire.

6. Un système selon la revendication 5, où lesdits moyens (22) de multiplexage par intervalles de temps comprennent un dispositif logique de contrôle asservi en fréquence radio qui définit les impulsions en fréquence radio.

7. Un système selon la revendication 6, où ledit émetteur de base (2) comprend en outre un amplificateur de puissance (25) en fréquences radio placé entre une sortie du dispositif logique de contrôle asservi en fréquences radio et ladite antenne en anneau de l'émetteur de base afin d'amplifier lesdites impulsions.

8. Un système selon l'une quelconque des revendications précédentes où ledit récepteur de base (14) comprend une antenne en anneau (12) pour recevoir lesdits signaux de retour provenant dudit transpondeur.

9. Un transpondeur passif (8) pouvant coopérer avec un émetteur de base et un récepteur de base dans un système selon la revendication 1, le transpondeur (3) comprenant une antenne (24) pour recevoir des signaux capables d'activer le transpondeur pour qu'il produise des signaux de retour, des moyens (38) stockant un code d'identification identifiant le transpondeur (8) et des moyens (42) pour moduler les signaux de retour d'après le code d'identification, caractérisé par:

ladite antenne (24) pourvant répondre aux impulsions en fréquences radio à une fréquence radio donnée et générer un signal de retour qui admet ladite fréquence radio donnée et suit chaque telle impulsion, grâce à l'utilisation de l'énergie stockée dans l'antenne (24).

10. Un transpondeur passif selon la revendication 9, où ladite antenne (24) comprend une bobine d'induction (26) reliée à une capacité (28) pour former un circuit résonnant à ladite fréquence donnée, ladite bobine (26) captant lesdites impulsions à la fréquence radio et le signal de retour étant généré par l'oscillation du circuit résonnant (26 à 28) en réponse à chaque telle impulsion.

11. Un transpondeur passif selon les revendications 9 ou 10, où lesdits moyens (38) de stockage du code d'identification comprennent un enregistreur de code programmé avec le code et comprenant en outre des moyens (40) pour encoder ledit code d'identification provenant dudit enregistreur de code et pour le transformer en un signal provenant dudit enregistreur de code et pour le transformer en un signal binaire jumeau présentant un changement d'état à chaque bit binaire, ledit signal binaire jumeau étant appliqué audit modulateur (42) à chaque signal de retour.

12. Un transpondeur passif selon la revendication 11, comprenant de plus des moyens de contrôle de séquence pouvant répondre aux impulsions d'horloge afin de contrôler la sortie dudit enregistreur (38) de code d'après un nombre prédéterminé de bits.

13. Un transpondeur passif selon la revendication 10 ou la revendication 11, comprenant de plus une source (34) d'impulsions d'horloge, ladite source (34) d'impulsions d'horloge se déclenchant quand ladite capacité (28) est chargée à une tension suffisante pour activer lesdits moyens (38) de stockage du code d'identification.

Fig. 1

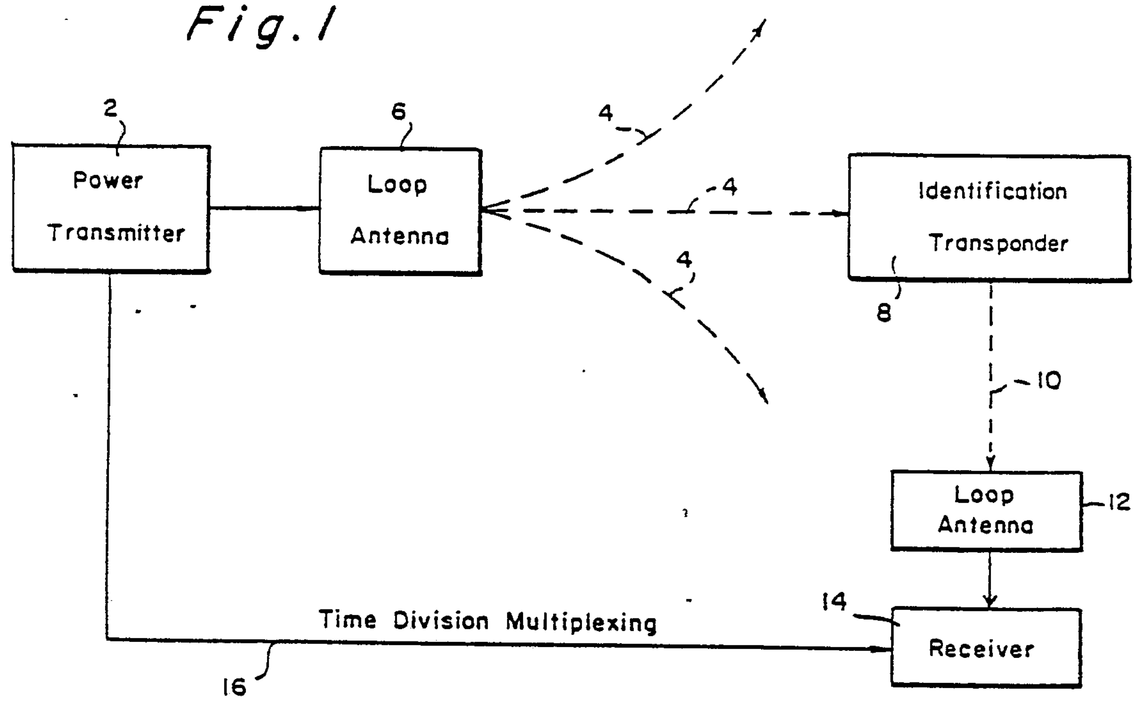
2
Power Transmitter
6
Loop Antenna
4
4
4
Identification Transponder
8
10
Loop Antenna
12
14
Receiver
Time Division Multiplexing
16

Fig. 2

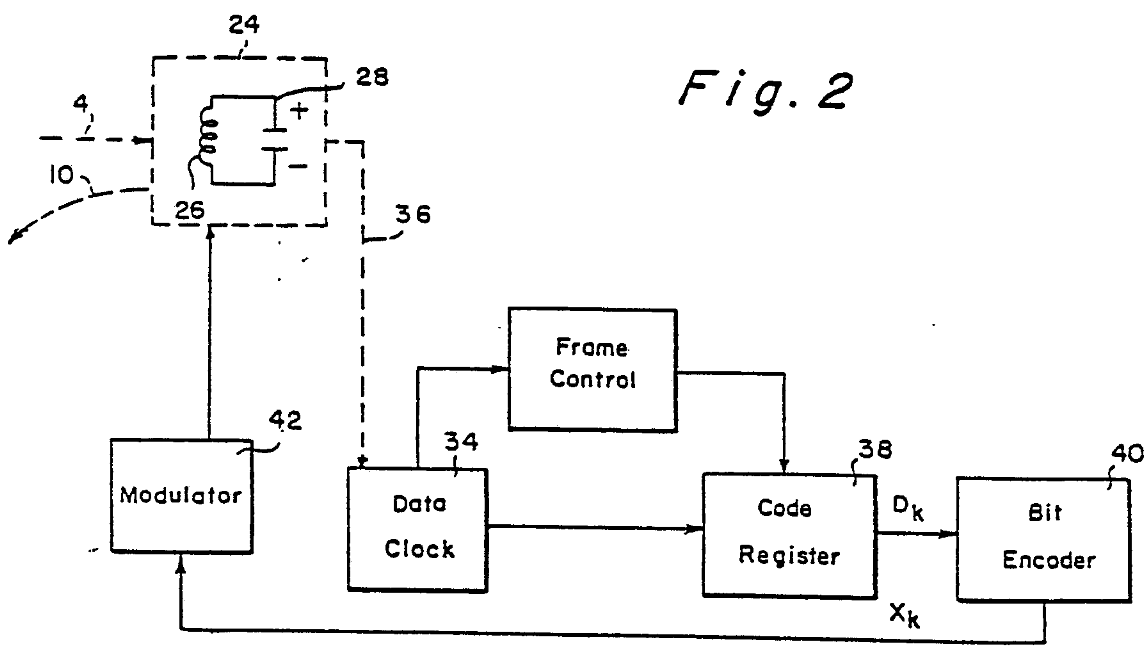
24
28
4
10
26
36
Frame Control
42
34
38
40
Modulator
Data Clock
Code Register
$D_k$
Bit Encoder
$X_k$

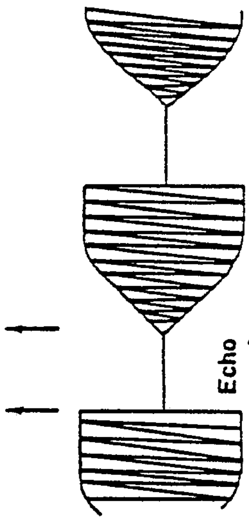


Fig.5a

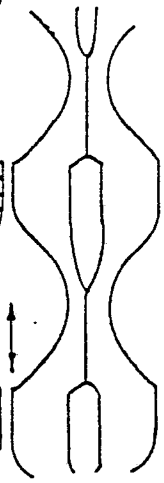

Fig.5b

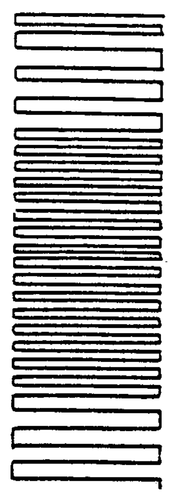

Fig.6a

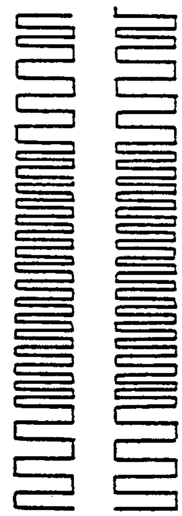

Fig.6b

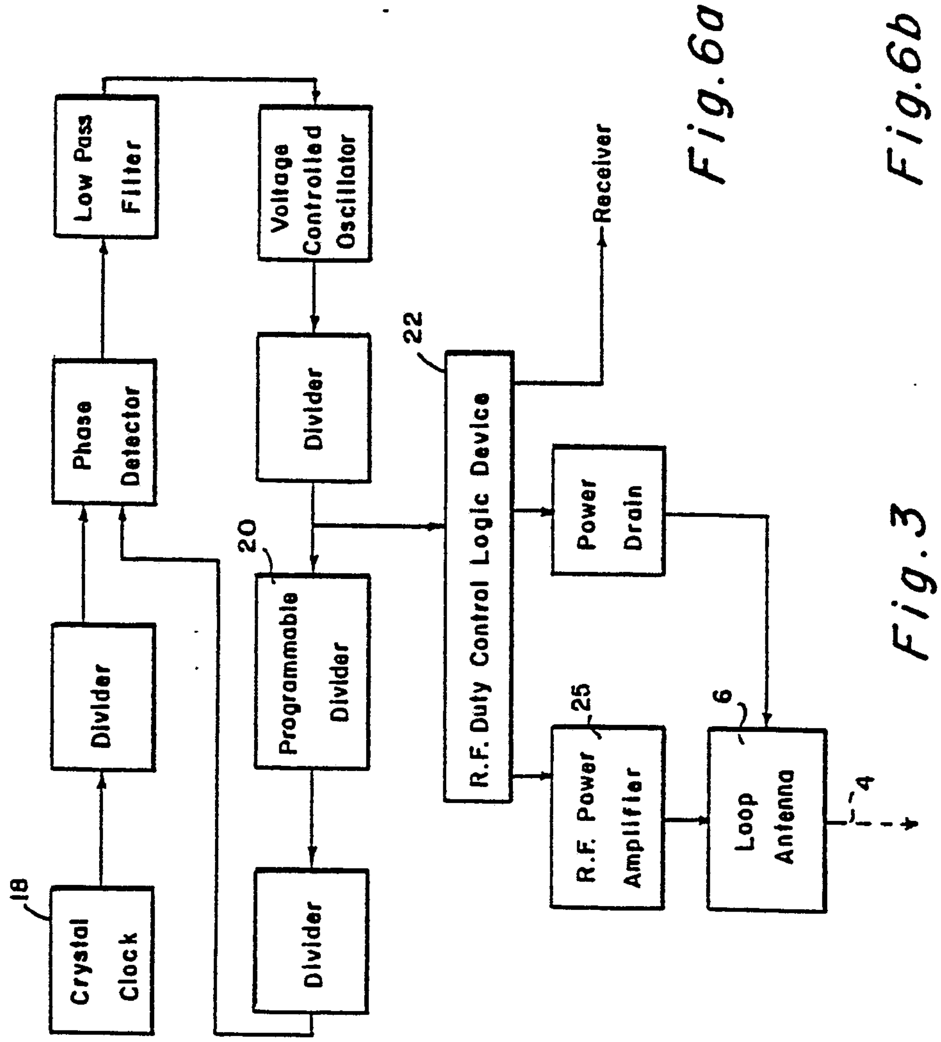


Fig.3

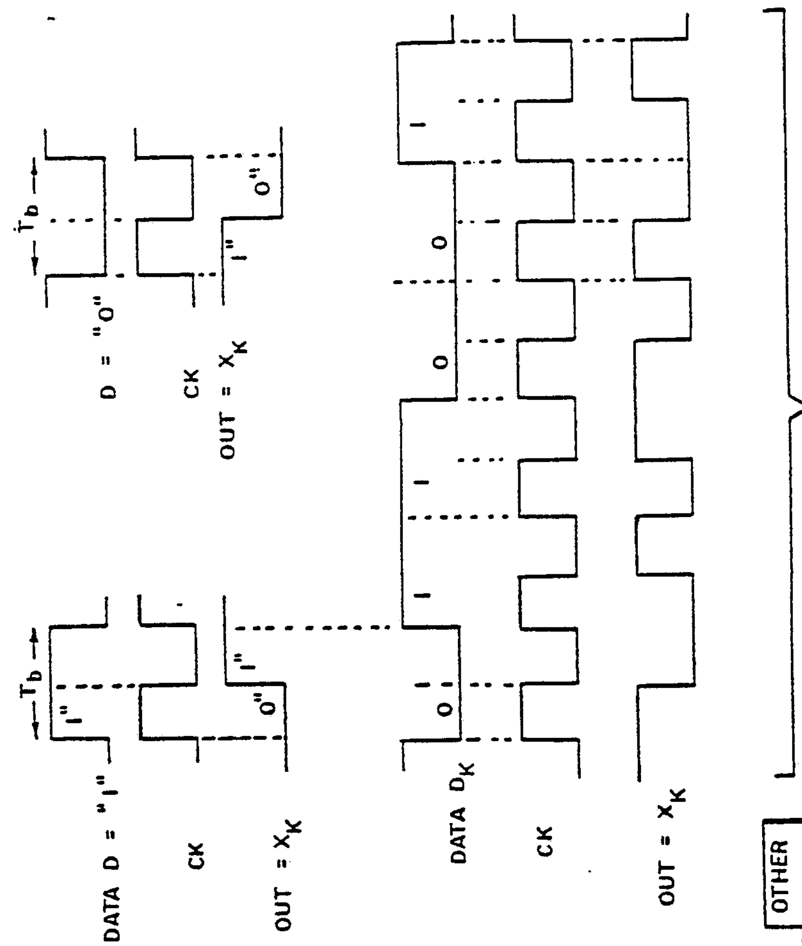
DATA D = "1"
"1"
"0"
Tb
CK
OUT = $X_K$
D = "0"
"1"
"0"
CK
OUT = $X_K$
DATA $D_K$
0
1
1
0
0
1
CK
OUT = $X_K$

Fig. 9

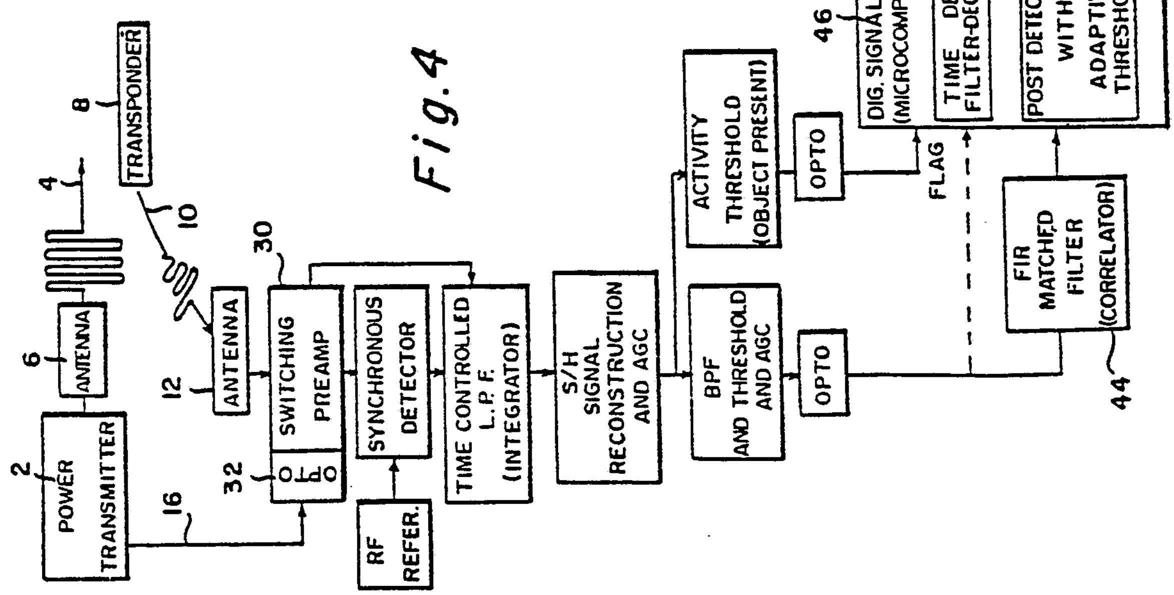
2
POWER TRANSMITTER
6
ANTENNA
4
8
TRANSPONDER
10
12
ANTENNA
16
32
30
SWITCHING PREAMP
RF REFER.
SYNCHRONOUS DETECTOR
TIME CONTROLLED L.P.F. (INTEGRATOR)
S/H SIGNAL RECONSTRUCTION AND AGC
BPF AND THRESHOLD AND AGC
ACTIVITY THRESHOLD (OBJECT PRESENT)
OPTO
OPTO
FLAG
46
DIG. SIGNAL PROC (MICROCOMPUTER)
TIME DELAY FILTER-DECODE
POST DETECTION WITH ADAPTIVE THRESHOLD
FIR MATCHED FILTER (CORRELATOR)
44
OTHER INPUTS
INFO RELEASE /STORE
DEVICE CONTROL

Fig. 4

Fig.7a

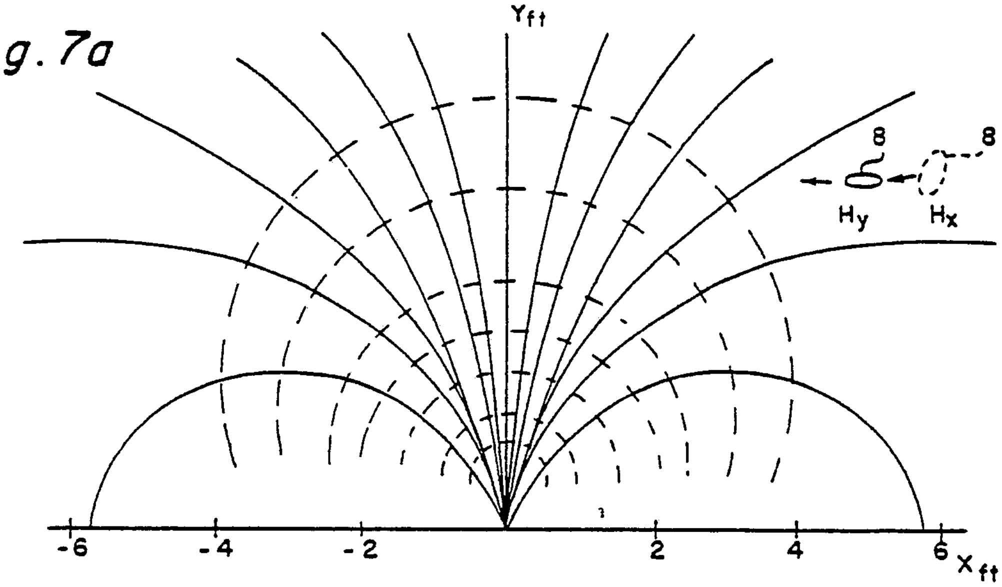


Fig.7b

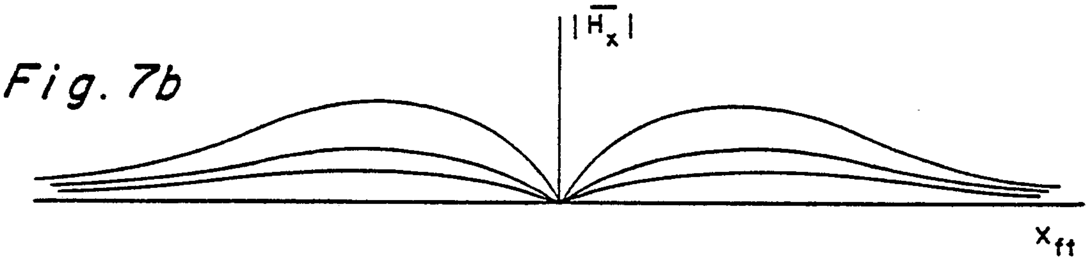


Fig.7c

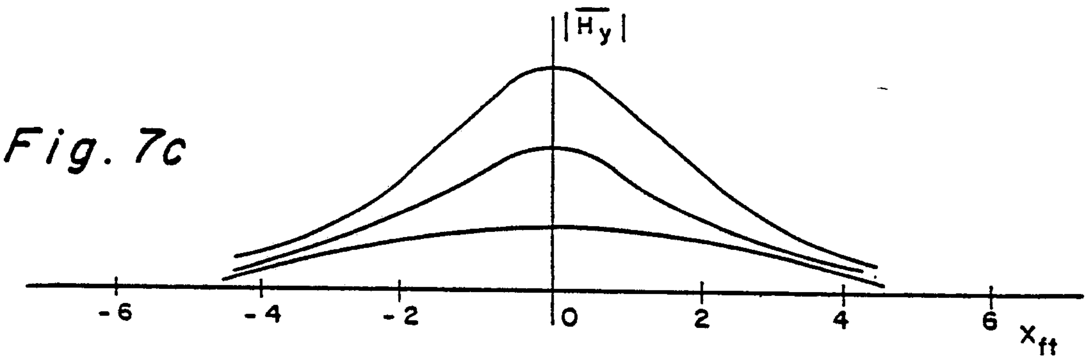


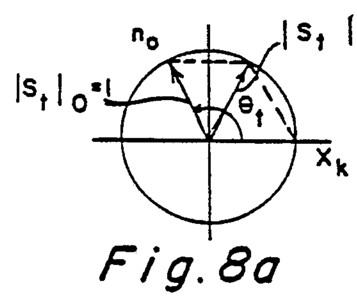


Fig.8a

Fig.8b

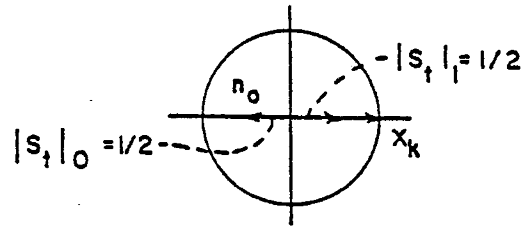


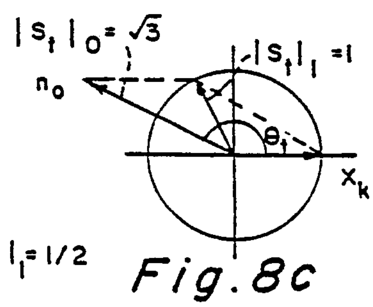


Fig.8c

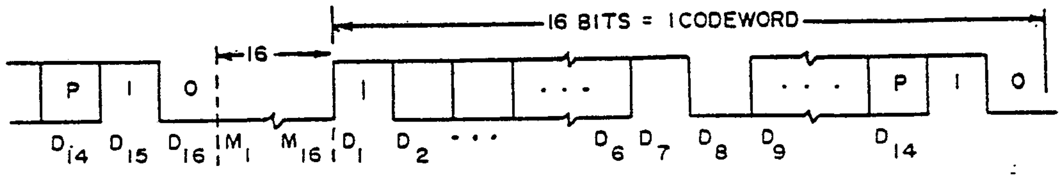
16 BITS = 1 CODEWORD
16
P
1
0
1
. . .
. . .
P
1
0
$D_{14}$
$D_{15}$
$D_{16}$
$M_1$
$M_{16}$
$D_1$
$D_2$
$D_6$
$D_7$
$D_8$
$D_9$
$D_{14}$

*Fig.10*

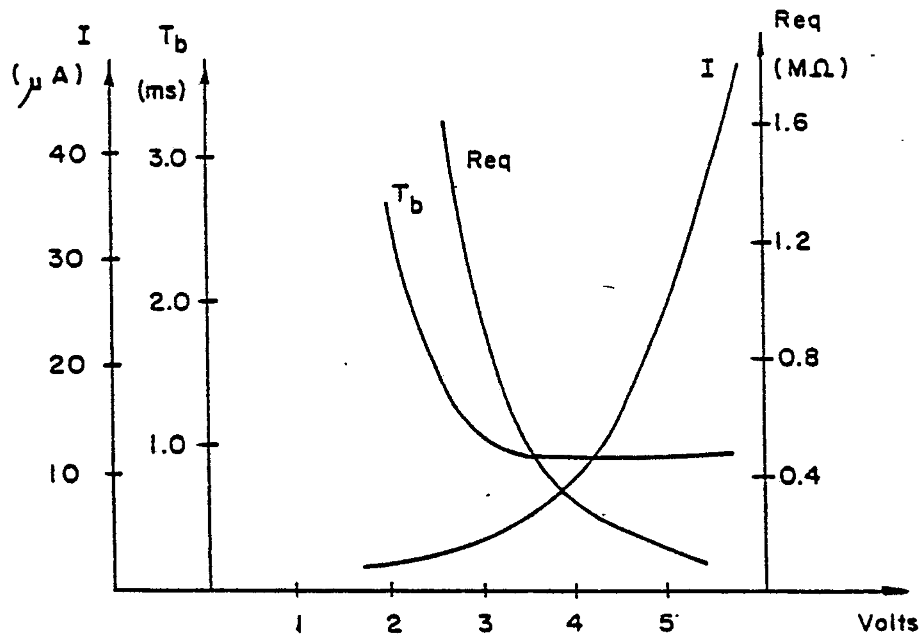
I
(μA)
$T_b$
(ms)
Req
(MΩ)
40
30
20
10
3.0
2.0
1.0
1.6
1.2
0.8
0.4
Req
$T_b$
I
1
2
3
4
5
Volts

*Fig.11*

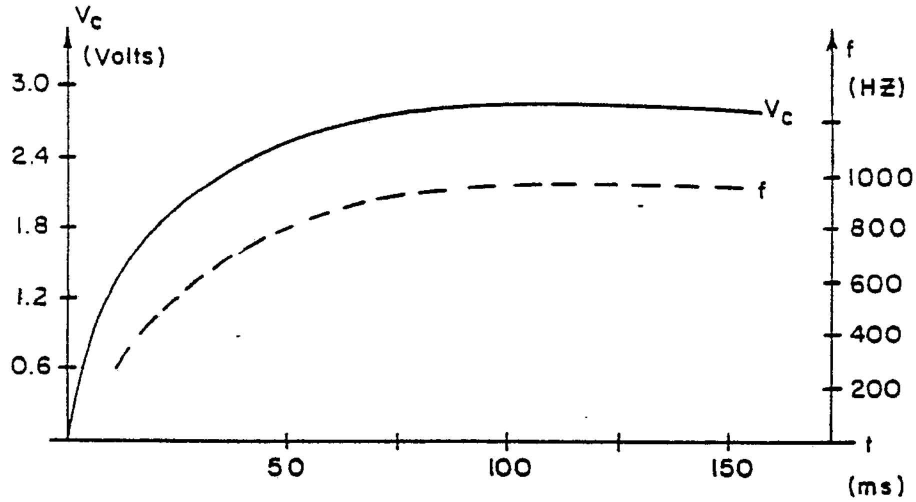


Fig.12

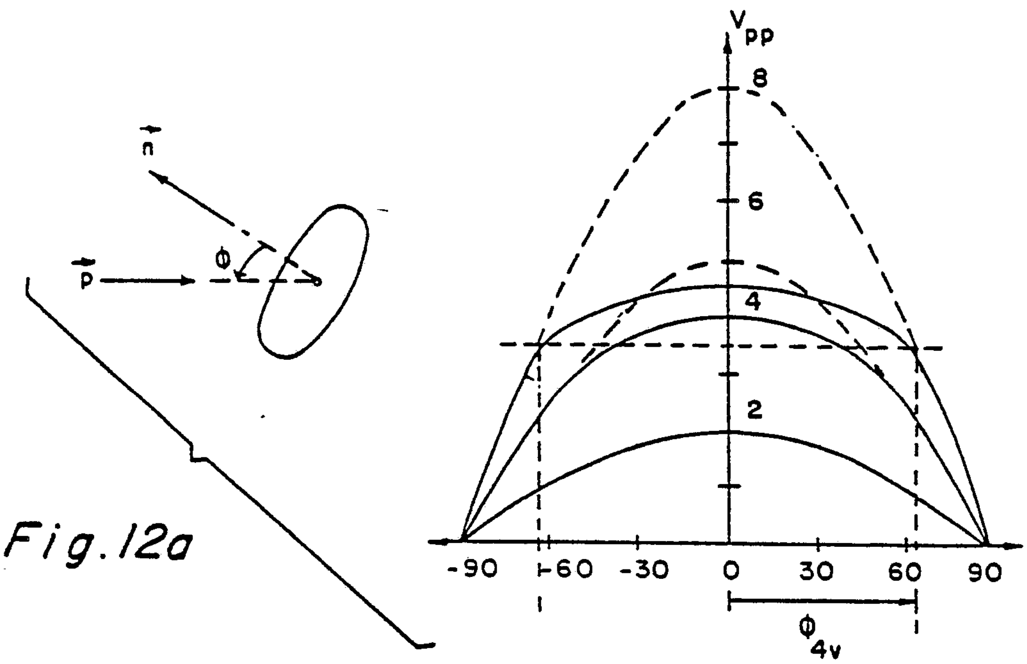


Fig.12a

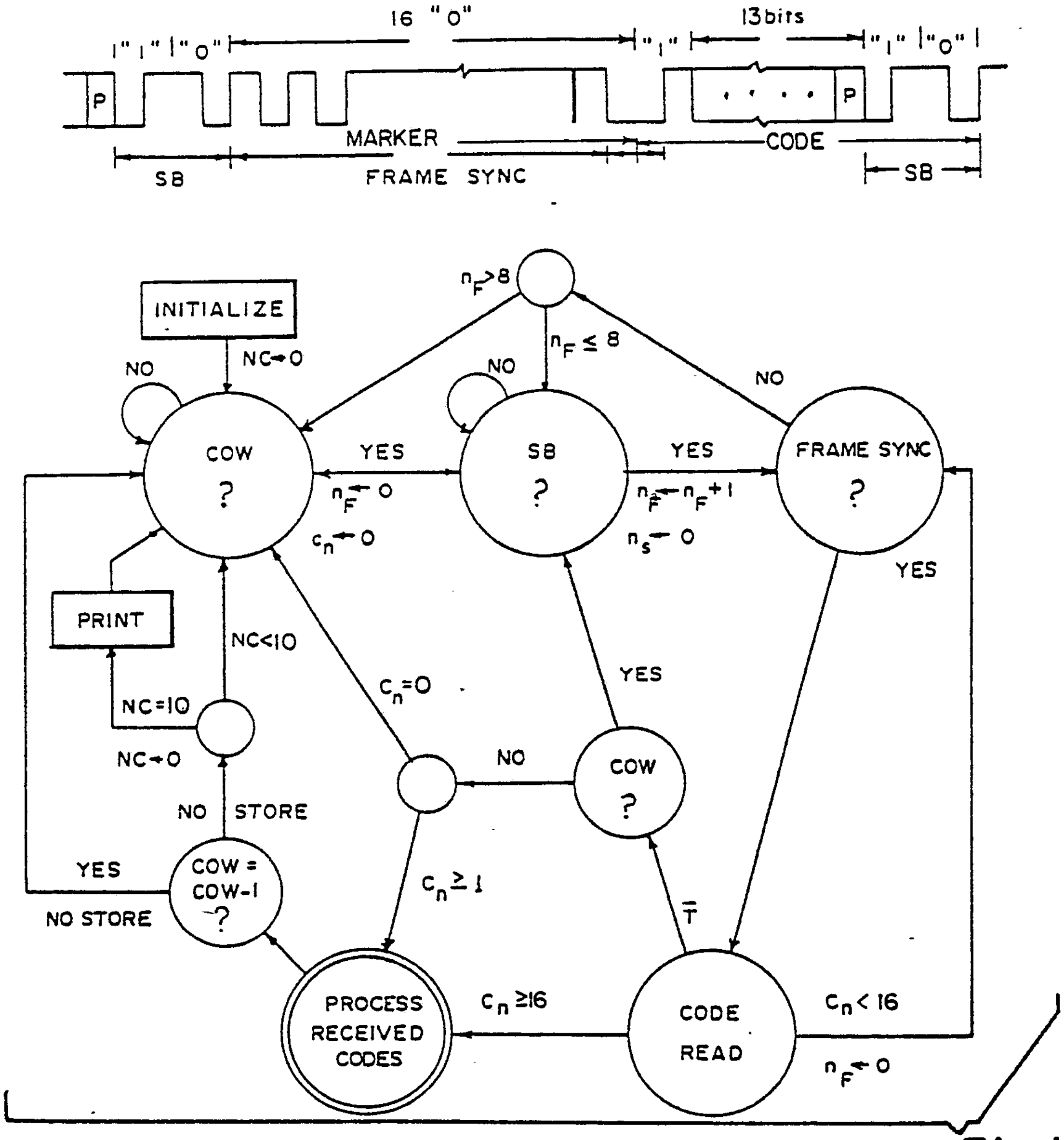

16 "0"
13bits
"1" "0"
"1"
"1" "0"
P
P
MARKER
CODE
SB
FRAME SYNC
SB
INITIALIZE
NC←0
NO
COW ?
YES
$n_F$←0
$c_n$←0
NO
SB ?
YES
$n_F$←$n_F$+1
$n_s$←0
FRAME SYNC ?
YES
$n_F$>8
$n_F$≤8
NO
PRINT
NC<10
NC=10
NC←0
$c_n$=0
YES
NO
COW ?
NO
STORE
YES
COW = COW-1 ?
NO STORE
$c_n$≥1
$\bar{T}$
PROCESS RECEIVED CODES
$c_n$≥16
CODE READ
$c_n$<16
$n_F$←0


Fig.13

Fig.14

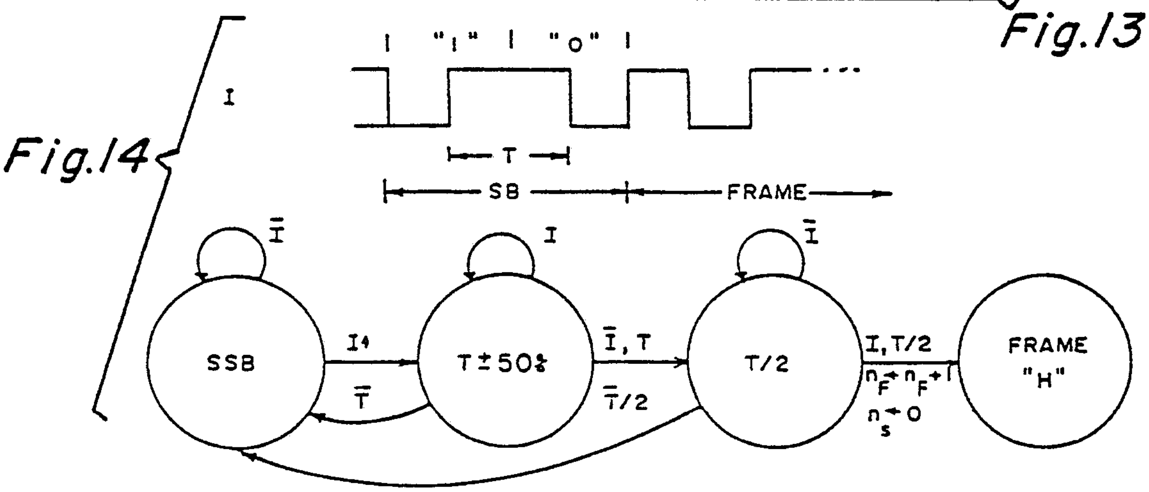

I
"1" "0"
T
SB
FRAME
$\bar{I}$
I
$\bar{I}$
SSB
I4
$\bar{T}$
T±50%
$\bar{I}$, T
$\bar{T}$/2
T/2
I, T/2
$n_F$←$n_F$+1
$n_s$←0
FRAME "H"

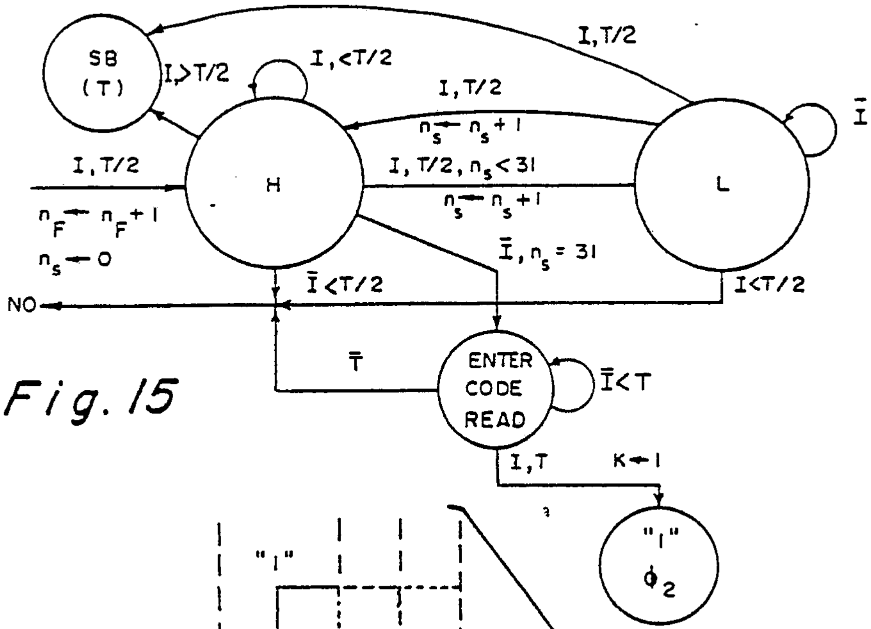
SB (T)
I,>T/2
I,<T/2
I,T/2
I,T/2
$n_s \leftarrow n_s+1$
H
L
Ī
I,T/2
$n_F \leftarrow n_F+1$
$n_s \leftarrow 0$
I,T/2, $n_s$<31
$n_s \leftarrow n_s+1$
Ī, $n_s$ = 31
Ī<T/2
I<T/2
NO
T̄
ENTER CODE READ
Ī<T
I,T
K←1
"1" $\phi_2$

Fig. 15

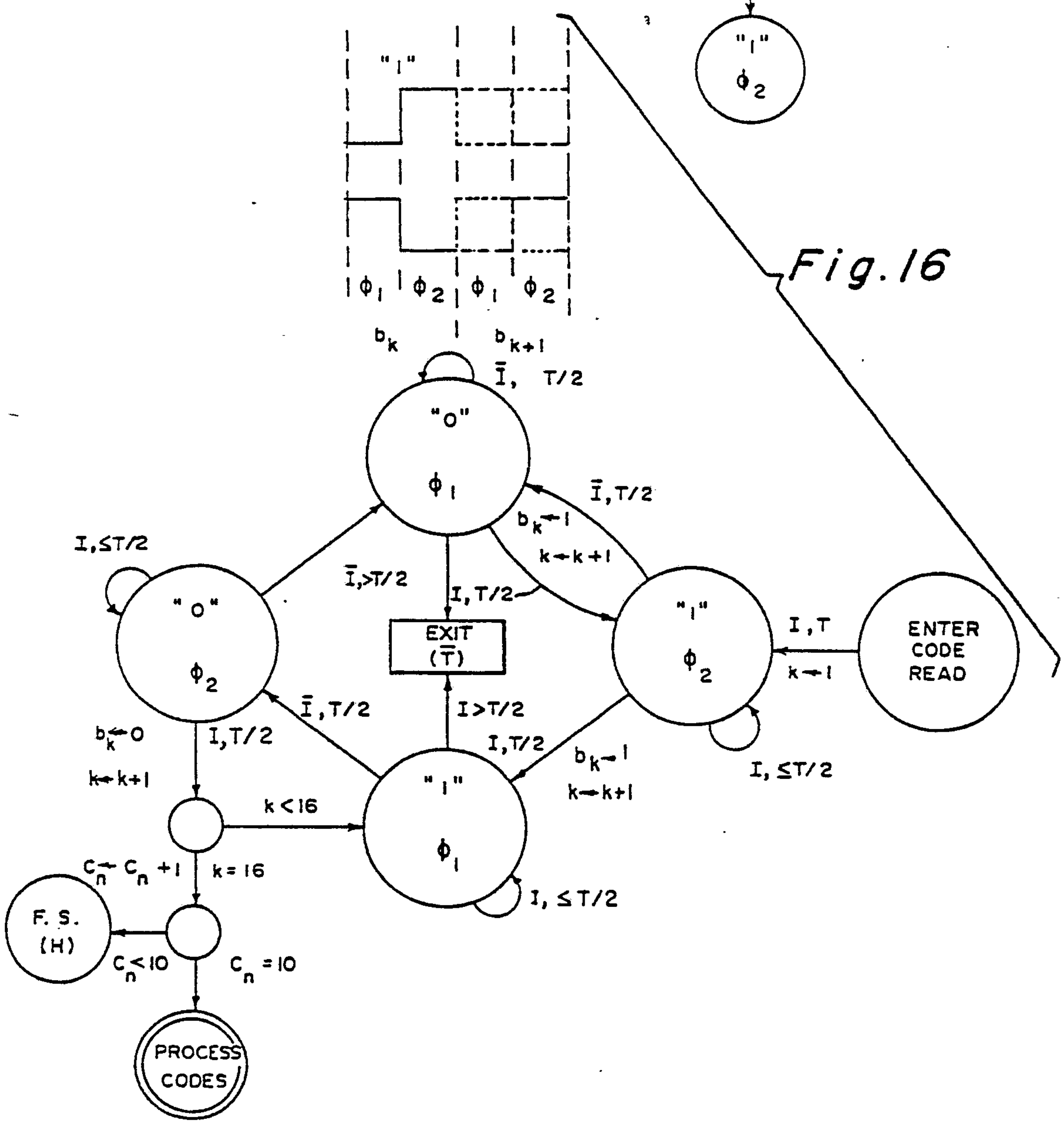
"1"
$\phi_1$ $\phi_2$ $\phi_1$ $\phi_2$
$b_k$
$b_{k+1}$
Ī, T/2
"0" $\phi_1$
Ī,T/2
$b_k \leftarrow 1$
k←k+1
I,≤T/2
"0" $\phi_2$
Ī,>T/2
I,T/2
EXIT (T̄)
"1" $\phi_2$
I,T
k←1
ENTER CODE READ
Ī,T/2
I>T/2
I,T/2
$b_k \leftarrow 1$
k←k+1
I, ≤T/2
$b_k \leftarrow 0$
I,T/2
k←k+1
k<16
"1" $\phi_1$
$c_n \leftarrow c_n+1$
k=16
I, ≤T/2
F. S. (H)
$c_n$<10
$c_n$ =10
PROCESS CODES

Fig. 16